Europäisches Patentamt

European Patent Office

Office européen des brevets

(11) Publication number: **0 371 275**
**A2**

## (12) EUROPEAN PATENT APPLICATION

(21) Application number: **89120346.5**

(22) Date of filing: **03.11.89**

(51) Int. Cl.⁵: **H02H 9/02**

(30) Priority: **30.11.88 US 278090**

(43) Date of publication of application:
**06.06.90 Bulletin 90/23**

(84) Designated Contracting States:
**DE FR GB**

(71) Applicant: **International Business Machines Corporation**
**Old Orchard Road**
**Armonk, N.Y. 10504(US)**

(72) Inventor: **Smith, Forrest Kimberley**
**13134 Carriage Ford Road**
**Nokesville VA 22123(US)**
Inventor: **Woodworth, George Kelsey**
**4800 Catharpin Road**
**Gainesville VA 22065(US)**

(74) Representative: **Gaugel, Heinz, Dipl.-Ing.**
**IBM Deutschland GmbH Schönaicher Strasse 220**
**D-7030 Böblingen(DE)**

(54) **A high speed, current limiting device.**

(57) The improved circuit breaker design addresses the need to limit circuit fault currents and still retains the reliability and isolation provided by a mechanical contact breaker. Internal circuitry is designed to limit fault currents to a source-supportable value until the mechanical action of the breaker disconnects the faulted load circuit. The limiting action will respond in microseconds to hold the fault current to a preset value until the contacts are opened. This high speed protection capability minimizes disturbances to the power source and prevents short-circuit voltage sags which could disrupt other loads served by the power network.

The new breaker design incorporates contacts (3A, 3B, 3C) and a mechanical trip mechanism (4,5) similar to those of existing breakers. A magnetic amplifier (1A, 1B, 1C) is used to reactively impede the current to a controlled value during fault current conditions. The magnetic amplifier impedance is turned on and off by an electronic controller (20) which monitors load current. When an abnormally large current is drawn from the load terminals, the controller (20) instantly switches on the impedance of the magnetic amplifier (1A, 1B, 1C), limiting the current. If the overload condition persists for a specified length of time, the controller (20) will energize a solenoid (4) to trip the breaker.

FIG. 1.

## A HIGH SPEED, CURRENT LIMITING DEVICE

The invention disclosed broadly relates to electrical switching devices and more particularly relates to current limiting circuits finding particular application in conjunction with circuit breakers.

Circuit breakers are designed to switch off damaging fault currents by interrupting the electrical path between the source and the load distribution wiring. The time required to mechanically isolate the current path is typically tens of milliseconds. This delay in opening the circuit may allow the fault current to drag the bus voltage down enough to upset electronic loads fed from further upstream in the distribution system.

Power supplies for electronic systems are generally unable to operate through voltage droops that last for tens of milliseconds. An improved circuit breaker that would operate electronically and open fault currents more rapidly would have to rely on solid state components to carry the normal current. This dependence on semiconductors would limit surge handling capabilities and consume significant amounts of power in conduction losses. With present technology, large power switching capacity can only be achieved by paralleling silicon components, at the expense of greatly reduced reliability and increased size and weight. Furthermore, an all-semiconductor solution to the problem of rapidly opening faulted circuits does not provide the open-circuit isolation required for the safety of personnel performing downstream service to equipment.

The source voltage droop problem with magnetic breakers has attracted industry-wide attention, most of which has focused on finding ways of opening a faulted load circuit faster. This, however, is not a necessary goal in protecting the source voltage. In a departure from traditional engineering doctrine, what is really necessary is a device which rapidly limits fault current. Once current is under control, a conventional mechanical contacting breaker is fast enough for disconnecting the circuit.

It is therefore an object of the invention to provide an improved current limiting device for use in conjunction with circuit breakers.

It is another object of the invention to limit circuit currents while still retaining the reliability and isolation provided by mechanical contact circuit breakers.

It is still a further object of the invention to provide a circuit for limiting fault currents to a source-supportable value until the mechanical action of a mechanical circuit breaker can disconnect the faulted load from the circuit.

It is still a further object of the invention to provide an improved current limiting circuit which will rapidly isolate a load from other loads connected in a network to prevent overloading the power network.

It is still a further object of the invention to provide an improved current limiting circuit which provides high speed protection capability while minimizing disturbances to the power source and preventing short circuit voltage sags which can disrupt other loads served by the power network.

It is still another object of the invention to provide an improved current limiting device which avoids the insertion of resistive impedances which dissipate electrical energy.

It is still a further object of the invention to provide an improved current limiting device which will handle inrush currents during start-up intervals, overload currents during circuit faults, and yet will provide a high series impedance if the current limiting circuit itself becomes faulty.

It is yet a further object of the invention to provide an improved current limiting device which has enhanced fail safe features.

It is yet a further object of the invention to provide an improved current limiting device which has its limiting values programmable.

It is yet a further object of the invention to provide an improved current limiting device which has both precise and accurate current limit value.

It is yet a further object of the invention to provide an improved current limiting device which, when used to control a mechanical circuit breaker, has a programmable current limit value and a programmable delay interval between the onset of the current limiting feature and the tripping of the mechanical contacts of the controlled circuit breaker.

These and other objects, features and advantages of the invention are accomplished by the high speed, current limiting device disclosed herein. The improved circuit breaker design addresses the need to limit circuit fault currents and still retains the reliability and isolation provided by a mechanical contact breaker. Internal circuitry is designed to limit fault currents to a source-supportable value until the mechanical action of the breaker disconnects the faulted load circuit. The limiting action will respond in micro-seconds to hold the fault current to a preset value until the contacts are opened. This high speed protection capability minimizes disturbances to the power source and prevents short-circuit voltage sags which could disrupt other loads served by the power network.

The new breaker design incorporates contacts and a mechanical trip mechanism similar to those of existing breakers. A magnetic amplifier (abbreviated as "mag-amp" and also called a saturable core reactor) is used to reactively impede the current to a controlled value during fault current conditions. The magnetic amplifier impedance is turned on and off by an electronic controller which monitors load current. When an abnormally large current is drawn from the load terminals, the controller instantly switches on the impedance of the mag-amp, limiting the current. If the overload condition persists for a specified length of time, the controller will energize a solenoid to trip the breaker.

In normal operation the magnetic amplifier element is operated in a saturated mode, reducing reactive effects by the ratio between the permittivity of the magnetic core and that of its saturated value (close to that of air, 1.0). Reactance ratios in excess of one hundred-to-one are achievable, and it is this wide dynamic inductance range that allows a low "on" impedance of the circuit during normal operation.

Saturable core reactors have a large power gain factor, allowing low energy DC signals to control high AC power. A controller provides a regulated DC current to saturate a portion of the iron core used for the reactor windings. While operated in a saturated mode, the reactor has its effective inductance value reduced to some minimum value. At this minimum inductance value, the passage of AC current through the main windings is impeded only slightly. When the control voltage is removed, the magnetic circuit is closed and the reactor develops a significant impedance to the fault current, limiting it to a source-supportable value until the breaker contacts can be opened. Since the reactor uses a reactance rather than a resistance to limit fault current, the total energy dissipation is very small.

The circuit breaker consists of a set of contacts in series with a magnetic reactor element. A digital control circuit monitors the load current and switches the reactor on and off as required to limit peak currents. The controller may also open the breaker contacts by energizing the trip coil. Power to operate the control circuits is obtained from the power source. The current sense circuits and magnetic reactor can be magnetically coupled to serve double duty and reduce the number of components physically located in the breaker case. Some of the breaker's internal volume will be used to house the electronics; however, having a fault current limit allows the contacts and arc quenching grids to be physically smaller than those presently needed in conventional breakers.

In an unpowered state the saturable core reactance is "in" the circuit and thus will limit the inrush current during the first application of power, providing a "soft start" effect. The reactance is then switched out of the circuit by the controller as the inrush current demand reduces. The limiting impedance for a given size breaker is a relatively small value, and intended only to hold surge and fault currents to a safe limit.

An example circuit breaker is designed to limit fault currents to ten times the rated value. Since the impedance used to limit current is not resistive, there is only minimal heating of the breaker components in the limiting mode.

The trip circuits in this circuit breaker are redundant and designed to operate electronically, magnetically, thermally, and manually. The sense circuits controlling the magnetic reactor will initiate a trip if a 10x overcurrent condition persists beyond a start-up delay. It will also cause trip if the drawn current exceeds rating by a small amount for a relatively long period of time. Both aspects of this trip profile are precise, accurate, and programmable because of the digital nature of the controller and the use of a design which measures and controls the delivered current.

The breaker design includes backup conventional magnetic and thermal trip mechanisms which are designed to operate outside the performance limits set for the controller. These would only come into play in the event of a failure in the controller, sense circuits, mag-amp, or trip coil. This double protection allows the design to replace existing breakers without safety exposures resulting from component failures. As in a conventional breaker, thermal response time is many times slower than the magnetic operation and is due to the heating of a bimetal strip during small overloads. Magnetic trip operation responds to overcurrents several times the rated current and typically takes several cycles to trip.

If the reactance were inserted or left in the circuit due to a malfunction, the resulting voltage loss would be only a few percent. This moderate voltage droop would possibly allow equipment operation until repairs could be made.

These and other objects, features and advantages of the invention will be more fully appreciated with reference to the accompanying figures.

Fig. 1 is a general functional block diagram of a circuit breaker using the high speed, current limiting device.

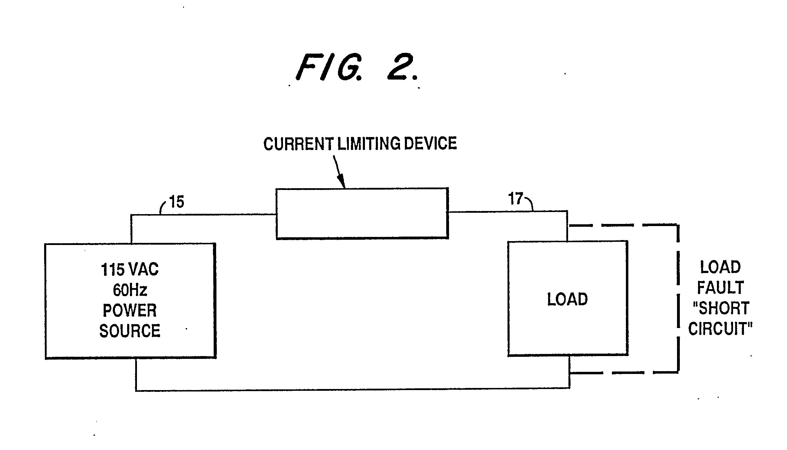

Fig. 2 is a typical single phase current limiting device application.

Fig. 3 is a graph of a current limiter delay response such as would be used to control a circuit breaker.

Fig. 4 is a more detailed block diagram of a single phase application for the high speed, current limiting device, including the control of a mechanical circuit breaker.

Fig. 5 is a more detailed circuit diagram of the magnetic amplifier in the single phase application shown in Fig. 4.

Fig. 6 is a detailed circuit diagram of the blocking core driver for the magnetic amplifier circuit shown in Fig. 5.

Fig. 7 is a flow diagram for a representative sequence of instructions to be executed by the microprocessor of Fig. 4 to carry out various operations of the high speed, current limiting device.

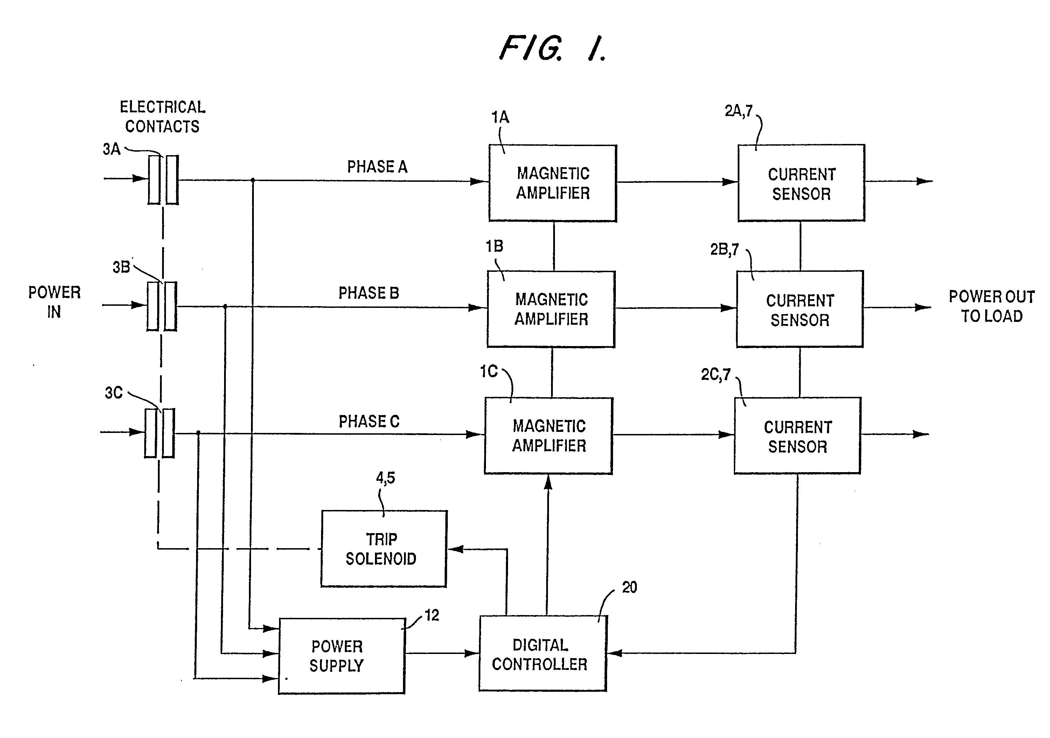

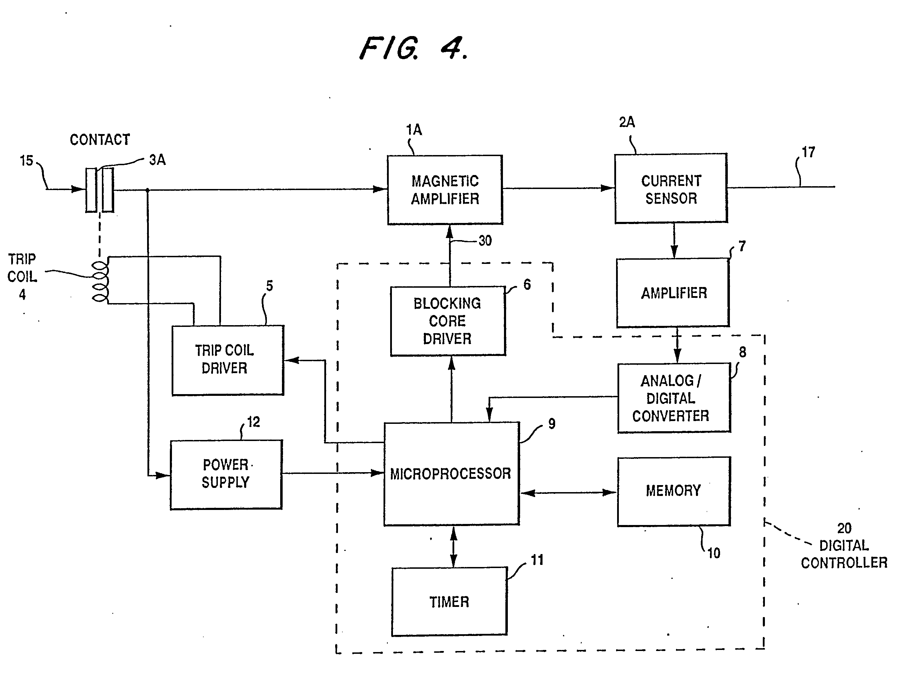

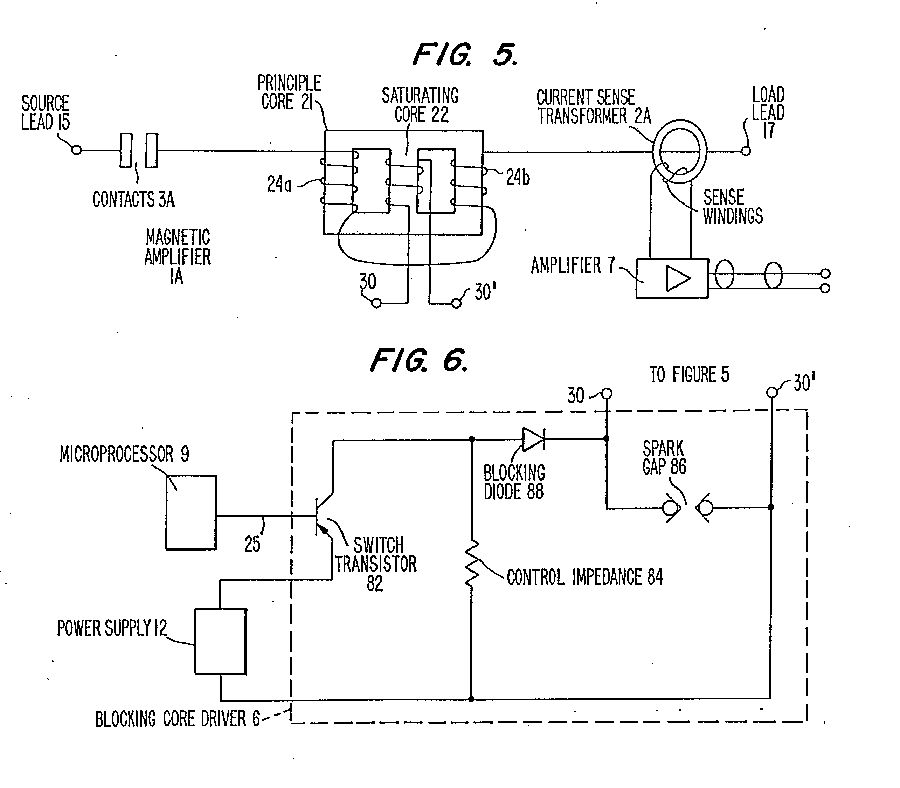

The high speed, current limiting device is shown in an overall functional block diagram in Fig. 1. The device in Fig. 1 is shown as applied to a three-phase power source and serves to limit the current in each respective phase when applied to a three-phase load. Each phase labeled Phase A, Phase B, and Phase C includes a magnetic amplifier 1A, 1B and 1C, respectively, which are shown in greater detail in Figs. 4, 5 and 6. A current sensor 2A, 2B and 2C is connected in the current path between the power source and the load for the phases A, B and C, respectively. The current sensor 2A, 2B and 2C has an output which can be coupled through an amplifier 7 to a digital controller 20. The digital controller 20 has a control output which is coupled to the magnetic amplifier 1A, 1B and 1C for the respective phases A, B and C, respectively. The magnetic amplifier 1A, 1B and 1C each has a principal coil 24a, 24b as shown in Fig. 5, which is serially connected in the current path between the power source terminal 15 and the load terminal 17 as is illustrated in Fig. 4, for one of the phases, for example Phase A. The magnetic amplifier 1A, 1B and 1C, each also has a respective control coil such as a control coil 30, 30' for the magnetic amplifier 1A in Fig. 5, which is coupled to a control output of the digital controller 20. The magnetic amplifier 1A, for example, will impose a high inductive reactance in the current conducting path from the power terminal 15 to the load terminal 17 when a first control signal is input to the control coil 30, 30'. In the preferred embodiment, the magnetic amplifier 1A shown in Fig. 5 is a ferromagnetic saturable core which has a principal coil 24a, 24b which is serially connected in the current path between the power terminal 15 and the load terminal 17. When no magnetic flux is applied by the control coil 30, 30' at the central leg 22 of the magnetic amplifier 1A, the ferromagnetic domains in the saturable core 21 are available to be oriented by the magnetic field produced by the principal coil 24a, 24b which results from the current flowing in the current path from the power terminal 15 to the load terminal 17. This condition imposes a high reactive impedance serially connected between the power terminal 15 and the load terminal 17, thereby limiting the current flowing therebetween. This situation will obtain at the initial power application from the power source at terminal 15 to the load at terminal 17, thereby limiting the inrush current. This situation will also obtain at those times when it is desired to impose a high reactive impedance in series between the power source terminal 15 and the load terminal 17. Such times would naturally occur when an overcurrent condition has been sensed by the current sensor 2A in Fig. 5. At other times when normal operation is desired for the low impedance conduction of current from the power source terminal 15 to the load terminal 17, it is necessary to magnetically saturate the saturable core reactor 21 by applying a second control signal to the terminals 30, 30' in the central leg of the magnetic amplifier 1A. The signal to be applied to the saturating core at the terminals 30, 30' is a direct current sufficient to completely or at least substantially orient the magnetic domains in the saturating core 22 so that the effective magnetic permeability of the magnetic amplifier is reduced substantially to that in a vacuum. Because of the reduced magnetic permeability of the core, fewer lines of magnetic flux will link the principal coil 24a, 24b and thus the effective inductive reactance of the magnetic amplifiers serially connected in the current path between the power source terminal 15 and the load terminal 17 is reduced. This is the condition which is desired during normal operation when no overcurrent condition is sensed by the current sensor 2A.

The high speed, current limiting device is used with advantage to control the solenoid of a solenoid-operated mechanical circuit breaker connected in series between the power source terminal 15 and the load terminal 17. This can be seen in the three-phase embodiment depicted in Fig. 1 where the electrical contacts 3A, 3B and 3C are respectively serially connected in the current path connecting the power source to the load for the Phases A, B and C. The solenoids for the respective electrical contacts 3A, 3B and 3C can be controlled from the trip coil driver 5 shown in Fig. 4. The trip coil driver 5 is, in turn, controlled by the digital controller 20 in response to the current sensor 2A, 2B and 2C detecting an overcurrent condition on the current path for Phases A, B and C, respectively. Also, as shown in Fig. 1, a power supply 12 deriving its power from the input terminals of the power source, can provide the power to the digital controller 20 for the operation of the high speed, current limiting device. This is shown in greater detail in Fig. 4 for the single phase embodiment, for example for Phase A.

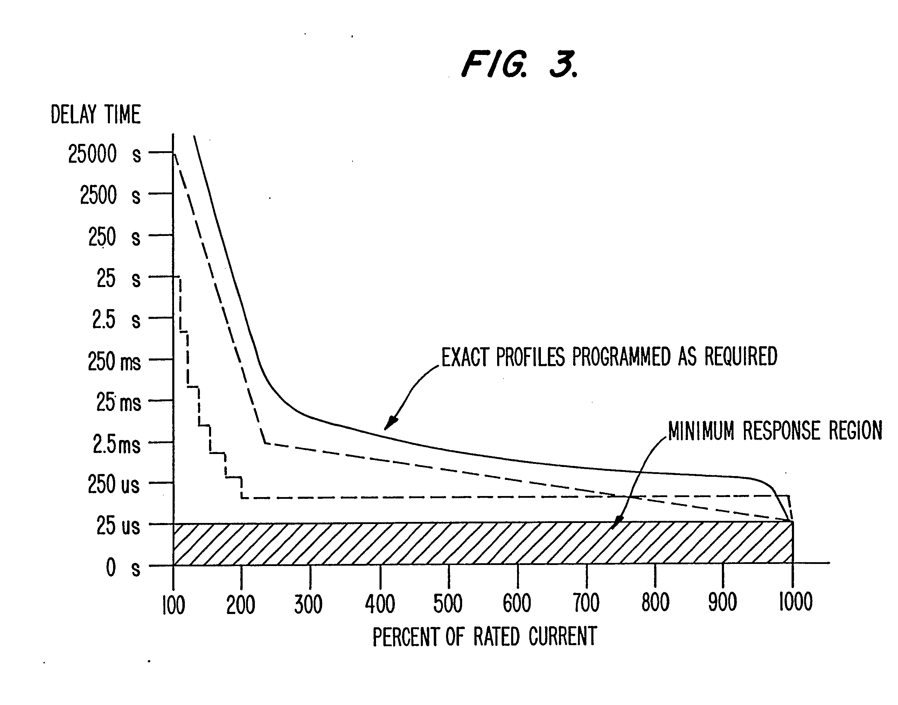

Referring to the single phase embodiment shown in Fig 4 which includes the control by the high speed, current limiting device of the circuit breaker contact 3A, it is seen that the current sensor 2A which is coupled to the current path between the power source terminal 15 and the load terminal 17, applies its current sense output to the amplifier 7. The amplifier 7, in turn, amplifies the signal output by the current sensor 2A and applies it to the analog-to-digital converter 8. The analog-to-digital converter 8 will convert the control signal originated by the current sensor 2A into a digital value which is then output to a digital input of the microprocessor 9. The microprocessor 9 can be, for example, an Intel 8080 eight-bit control processor, which uses a random access memory 10 to store the control program for operating the high speed, current limiting device. Also connected to the microprocessor 9 is a programmable timer 11 which can time intervals from preset digital values output to the timer 11 from the microprocessor 9. The memory 10 can include both a writable random access memory component and a read only memory component. The read only memory component can store operating system software and permanent application software necessary to run some of the invariant functions performed by the high speed, current limiting device. The random access memory portion can serve to store current limiting values, time interval values, and other programmable information which can be used to selectively alter the operating characteristics of the high speed, current limiting device. One form of data which is typically stored in the read only memory portion of the memory 10 is tables representing the circuit breaker trip delay graph shown in Fig. 3 which characterizes the operation of a particular type of mechanical circuit breaker 3A, 4. A third type of memory can be included in the memory 10, namely a jumper programmable memory which can employ manually inserted jumper contacts to select which one of a plurality of data tables representing circuit breaker trip delay characteristics is to be matched with a particular type of circuit breaker connected to the current limiting device.

The magnetic amplifier has its saturating core 22 magnetically oriented by a direct current applied to the terminals 30, 30'. This is accomplished by the magnetic amplifier blocking core driver circuit 6 shown in Fig. 6. When the current sensor 2A does not sense an overcurrent condition on the current path connecting the power source terminal 15 to the load terminal 17, then it is desired that the magnetic amplifier 1A does not impose a high reactive impedance in the current path. To make the reactive impedance of the magnetic amplifier 1A in its low state, a direct current must be applied through the coil 30, 30' so that the saturating core 22 is in its magnetically saturated state. When it is in its magnetically saturated state, there are a minimum of flux lines linking the principal coil 24a, 24b and thus the reactive impedance is minimized. In order to accomplish this, the blocking core driver circuit 6 shown in Fig. 6 must apply a direct current to the terminals 30, 30'. This is accomplished by having that direct current flow through the blocking diode 88 in Fig. 6. Since the blocking diode 88 must be conducting direct current to the terminal 30, the anode of the blocking diode 88 must be relatively positive with respect to its cathode. In order to accomplish this, the PNP bipolar transistor 82 must be in its conductive state, applying the positive potential of the power supply 12 to the anode of the blocking diode 88. This is accomplished by having the control output 25 of the microprocessor 9 apply a relatively negative potential to the base of the transistor, with respect to its emitter. This is the state of low inductive reactance for the magnetic amplifier 1A which is desired for normal current conducting operations where there is no inrush current expected during initial start-up and no overcurrent condition sensed by the current sensor 2A.

Alternately, if the current sensor 2A senses an over-current condition on the current path connecting the power supply terminal 15 to the load terminal 17, a signal is applied through the amplifier 7 to the analog-to-digital converter 8 which is in proportion to the magnitude of the current detected. The digital value for that magnitude is that output by the analog-to-digital converter 8 to the microprocessor 9. The microprocessor 9 will then output a signal to the blocking core driver 6 to change the reactive impedance of the magnetic amplifier 1A from its low value to a high value, thereby limiting the magnitude of the current flowing in the current path connecting the power supply to the load. Referring to Fig. 6 for the blocking core driver circuit, it is desired to turn off the direct current being supplied by the blocking diode 88 to the terminal 30. This is accomplished by reverse-biasing the blocking diode 88 making its anode more negative than its cathode by a diode drop, typically 0.7 volts for silicon diodes. This relatively negative potential is obtained by reducing or turning off the conductive state of the PNP transistor 82 so that the positive potential of the power supply 12 is no longer applied to the anode of the blocking diode 88. This is achieved by making the voltage of the base relatively more positive than the emitter for the PNP transistor 82. The microprocessor 9 outputs this more positive voltage level on line 25 in response to the signal which originated from the current sensor 2A indicating that an overcurrent condition has been detected in the current path connecting the power supply to the load. Because there is no longer any direct current flowing through the coil 30, 30' for the magnetic amplifier 1A, the saturating core 22 no longer has its ferromagnetic material preferentially oriented. Since the ferromagnetic material is now available for orientation by the magnetic field produced by the principal coil 24a, 24b, the increased magnetic permeability of the principal core 21 now allows more magnetic lines of flux to link the coil 24A, 24B, thereby increasing the inductive reactance of the magnetic amplifier 1A. This increased inductive reactance will serve to limit the magnitude of the current flowing through the current path connecting the power supply terminal 15 to the load terminal 17, as desired. It can be appreciated that it is necessary to rapidly stop the direct current flowing through the coil 30, 30′ in order to rapidly desaturate the ferromagnetic material in the saturating core 22. However, the magnetic flux produced by the coil 30, 30′ represents stored magnetic energy which must be rapidly dissipated if this is to be accomplished. The spark gap 86 which is connected in parallel to the terminals 30, 30′ enables the rapid dissipation of the energy represented by the magnetic flux stored in the coil 30, 30′ when direct current is flowing through it. When the direct current stops flowing through the coil 30, 30′, the back EMF which occurs across the spark gap 86 causes a spark to be generated, thereby rapidly discharging the stored energy and rapidly desaturating the saturating core 22, making it quickly available for creating the necessary increased inductive reactance in the current path connecting power supply terminal 15 to the load terminal 17. As was previously stated, when the direct current supplied from the power supply 12 through the transistor 82 is cut off, the coil 30, 30′ has a back EMF induced so that the terminal 30′ becomes relatively positive and the terminal 30 relatively negative. After a spark has discharged across the spark gap 86 due to high values of the back EMF, there may still remain a low voltage which is not sufficient to produce a spark. This low voltage is positive at the terminal 30′ and causes a small current to flow through the control impedance 84 and through the blocking diode 88 to the terminal 30. The control impedance 84 serves to resistively dissipate the remaining energy represented by the back EMF in the coil 30, 30′. In this manner, virtually all of the energy which was stored in the coil 30, 30′ when direct current was flowing through it, is effectively dissipated, thereby rapidly making the saturating core 22 available for increasing the inductive reactance of the magnetic amplifier 1A, as desired.

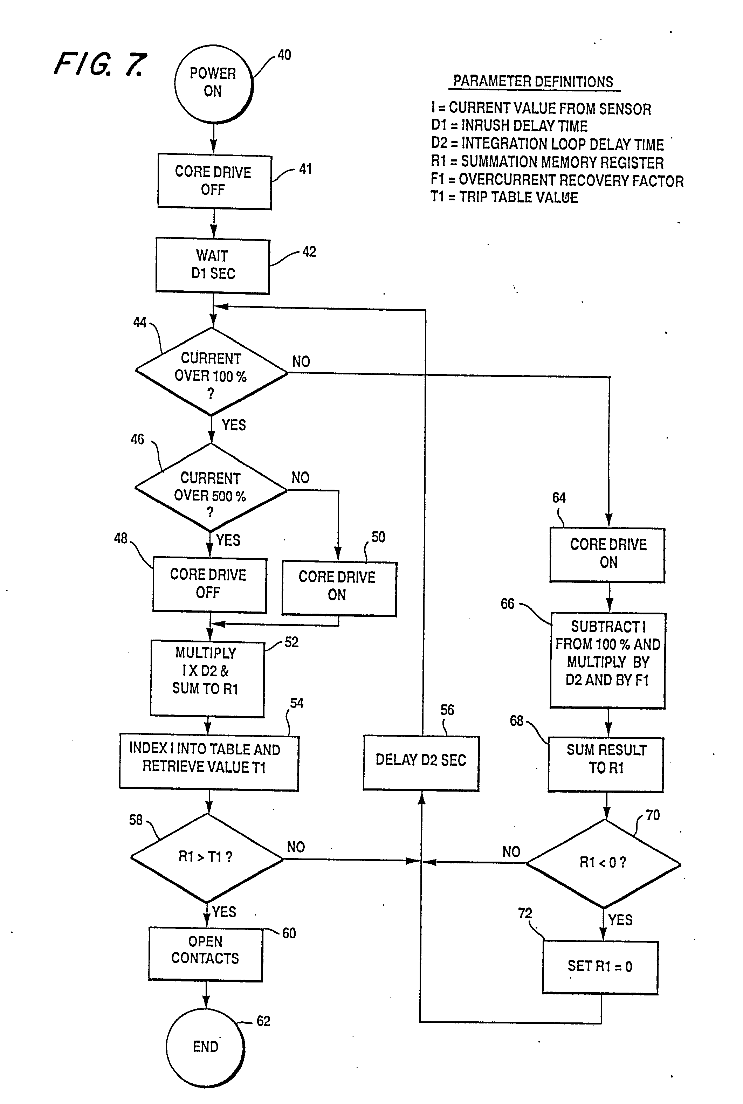

Referring to Fig. 7, shows a flow diagram of the sequence of operational steps carried out to perform the functions of the high speed, current limiting device. The flow diagram represents the sequence of instructions executed in the microprocessor 9. At initial power-on 40 of the flow diagram, the core drive is off, 41, and the microprocessor calls for a waiting period of D1 milliseconds in step 42 during which time an inrush current could be applied from the power supply terminal 15 to the load terminal 17. However, this is prevented from exceeding 10 times the rated maximum current of the circuit breaker 3A, by means of the higher inductive reactance state of the magnetic amplifier 1A connected in series in the current path. After the D1 waiting interval, the flow diagram transfers to the decision block 44 where one of two loops is entered depending upon the output of the current sensor 2A. One loop monitors overcurrent conditions and one loop monitors normal current conditions.

In the overcurrent case, if the measured current by the current sensor 2A is between 100 and 500 percent of the rated current, then the system branches to step 50, and it is desired to make the magnetic amplifier 1A go into its lower inductive reactance state and therefore the blocking core driver 6 will be energized. If the measured current by the current sensor 2A is between 500 and 1000 percent, then the core drive is switched (or remains) off, 48, and the magnetic amplifier is put into its higher inductive reactance state, thereby limiting the overcurrent condition to 1000 percent of rated current.

In step 52, the microprocessor 9 multiplies the current value I from sensor 2A by the integration loop delay time D2 and sums the result to general purpose register R1 in the microprocessor. The current value I is used as an address index into a table in read-only memory 10 (Fig. 4) of trip points and the corresponding value T1 is retrieved, step 54. In steps 58, 60 and 62, if the summation of overcurrent amp-seconds held in R1 is greater than the value T1 from the stored table of trip values, then the contacts are directed to open and the program ends. If, on the other hand, the summation of overcurrent amp-seconds, RI, is less than the trip value T1, then the microprocessor 9 initiates a delay of D2 seconds, step 56, using the timer 11, and the path returns to decision block 44 and repeats. It can be seen that in a persistent overcurrent condition the value in register R1 will build until the comparison with the table value is true, and the contacts will be opened.

If, however, the overcurrent condition goes away before reaching a trip value in R1, the decision 44 will lead program flow into the normal current loop. In this path, the core drive will be assured to be on, 64, controlling the magnetic amplifier 1A to its minimal reactance state. In step 66, the current value I will be subtracted from the 100 percent rated value, and the result will be multiplied by the integration loop delay value, D2 and by the overcurrent recovery factor, F1. This negative number will be summed to register R1 in step 68, thus reducing the value in R1 to a lower value. If this lower value of R1 is less than zero, then R1 will be set to zero, steps 70 and 72, thus establishing the lowest value of R1 to be zero.

Otherwise, if the new value of R1 is larger than zero in step 70, then the microprocessor 9 initiates a delay of D2 seconds, step 56, using the timer 11, and the path returns to decision block 44 and repeats. At each repetition of the loop, a determination is made 44 as to whether the measured current through the current sensor 2A exceeds 100 percent of the rated breaker value for the circuit breaker 3A. It can be seen that if the current remains in a normal range for long enough, the value of R1 will be reduced to zero and remain at that value until an overcurrent condition causes a different branch 44.

The flow diagram of Fig. 7 represents the program executed by the microprocessor 9 to carry out the various operations of the high speed, current limiting device.

Although a specific embodiment of the invention has been disclosed, it will be understood by those having skill in the art that changes can be made to that specific embodiment without departing from the spirit and the scope of the invention.

## Claims

1. A high speed, current limiting device connected in a current path between a power source terminal (15) and a load terminal (17), comprising:
a current sensing means (2A,7; 2B,7; 2C,7) coupled to said current path, having an output;
a controller means (20) having a sensor input connected to said output of said current sensing means, and having a control output (30);
a magnetic amplifier means (1A, 1B, 1C) having a principal coil (24a, 24b) serially connected in said current path and having a control coil connected to said control output (30) of said controller means (20), for imposing a high inductive reactance in said current path when no control signal is input to said control coil and for imposing a low inductive reactance in said control path when a control signal is input to said control coil;
whereby the magnitude of the current flowing through said current path can be limited in response to said current sensor (2A,7; 2B,7; 2C,7) sensing an overcurrent condition.

2. The apparatus of claim 1 which further comprises:
a solenoid actuated circuit breaker (3A, 3B, 3C) serially connected in said current path, having a control input coupled to said control output of said controller means (20);
whereby said circuit breaker can be energized to open in response to said current sensor (2A,7; 2B,7; 2C,7) sensing an overcurrent condition in said current path.

3. The apparatus of claim 1 or 2 which further comprises:
said controller means (20) including a microprocessor (9) which executes a sequence of program instructions to selectively control the limit of the current sensed by said current sensor (2A,7; 2B,7; 2C,7) which will result in said control means operating to change the inductive reactance state of said magnetic amplifier means (1A, 1B, 1C).

FIG. I.

POWER OUT TO LOAD

CURRENT SENSOR — 2A,7

CURRENT SENSOR — 2B,7

CURRENT SENSOR — 2C,7

MAGNETIC AMPLIFIER — 1A

MAGNETIC AMPLIFIER — 1B

MAGNETIC AMPLIFIER — 1C

DIGITAL CONTROLLER — 20

TRIP SOLENOID — 4,5

POWER SUPPLY — 12

PHASE A

PHASE B

PHASE C

ELECTRICAL CONTACTS

3A

3B

3C

POWER IN

IBM — MA 988 028

EP 0 371 275 A2

# FIG. 2.

CURRENT LIMITING DEVICE

15

17

115 VAC
60Hz
POWER
SOURCE

LOAD

LOAD
FAULT
"SHORT
CIRCUIT"

IBM — MA 988 028

EP 0 371 275 A2

# FIG. 3.

DELAY TIME

EXACT PROFILES PROGRAMMED AS REQUIRED

MINIMUM RESPONSE REGION

25000 s
2500 s
250 s
25 s
2.5 s
250 ms
25 ms
2.5 ms
250 us
25 us
0 s

100  200  300  400  500  600  700  800  900  1000

PERCENT OF RATED CURRENT

IBM — MA 988 028

EP 0 371 275 A2

# FIG. 4.

*FIG. 5.*

SOURCE LEAD 15

CONTACTS 3A

MAGNETIC AMPLIFIER 1A

PRINCIPLE CORE 21

SATURATING CORE 22

24a

24b

30

30'

CURRENT SENSE TRANSFORMER 2A

SENSE WINDINGS

LOAD LEAD 17

AMPLIFIER 7

*FIG. 6.*

TO FIGURE 5

30'

30

SPARK GAP 86

BLOCKING DIODE 88

CONTROL IMPEDANCE 84

SWITCH TRANSISTOR 82

25

MICROPROCESSOR 9

POWER SUPPLY 12

BLOCKING CORE DRIVER 6

# FIG. 7.

POWER ON — 40

CORE DRIVE OFF — 41

WAIT D1 SEC — 42

PARAMETER DEFINITIONS

I = CURRENT VALUE FROM SENSOR
D1 = INRUSH DELAY TIME
D2 = INTEGRATION LOOP DELAY TIME
R1 = SUMMATION MEMORY REGISTER
F1 = OVERCURRENT RECOVERY FACTOR
T1 = TRIP TABLE VALUE

44 — CURRENT OVER 100 % ? — NO

YES

46 — CURRENT OVER 500 % ? — NO

YES

48 — CORE DRIVE OFF

50 — CORE DRIVE ON

64 — CORE DRIVE ON

52 — MULTIPLY I X D2 & SUM TO R1

66 — SUBTRACT I FROM 100 % AND MULTIPLY BY D2 AND BY F1

54 — INDEX I INTO TABLE AND RETRIEVE VALUE T1

56 — DELAY D2 SEC

68 — SUM RESULT TO R1

58 — R1 > T1 ? — NO

70 — R1 < 0 ? — NO

YES

YES

60 — OPEN CONTACTS

72 — SET R1 = 0

62 — END

IBM — MA 988 028